(19) Europäisches Patentamt
European Patent Office
Office européen des brevets

(11) **EP 4 618 409 A1**

(12) **EUROPEAN PATENT APPLICATION**

(43) Date of publication:
**17.09.2025 Bulletin 2025/38**

(21) Application number: **24305363.4**

(22) Date of filing: **11.03.2024**

(51) International Patent Classification (IPC):
*H02S 50/00* *(2014.01)*

(52) Cooperative Patent Classification (CPC):
**H02S 50/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **TotalEnergies OneTech**
**92400 Courbevoie (FR)**

(72) Inventors:
- **TUOMIRANTA, Arttu**
  **92078 PARIS LA DEFENSE CEDEX (FR)**
- **CHAPON, Julien**
  **92078 PARIS LA DEFENSE CEDEX (FR)**
- **DRAHI, Etienne**
  **92078 PARIS LA DEFENSE CEDEX (FR)**
- **CUIF-SJOSTRAND, Marianne**
  **92078 PARIS LA DEFENSE CEDEX (FR)**

(74) Representative: **Lavoix**
**2, place d'Estienne d'Orves**
**75441 Paris Cedex 09 (FR)**

(54) **A METHOD FOR DETERMINING AN ORIENTATION OF A PHOTOVOLTAIC PANEL TO REDUCE THE DAMAGE CAUSED BY A HAIL EVENT**

(57)    The invention relates to a method for determining an orientation of a photovoltaic panel (10) to reduce the damage caused by a hail event, the method being computer-implemented and comprising the following phases:
- receiving input data relative to characteristics of a hail event, the input data comprising at least the mass of a hailstone and a hailstone velocity vector, and

- determining an orientation of the photovoltaic panel (10) as a function of the input data, in order to protect elements (12) underneath the photovoltaic panel (10) while preventing damages to occur on the photovoltaic panel (10), the determined orientation corresponding to an intermediate orientation of the photovoltaic panel (10) between a plurality of possible intermediate orientations.

FIG.1

**EP 4 618 409 A1**

**Description**

TECHNICAL FIELD OF THE INVENTION

The present invention concerns a method for determining an orientation of a photovoltaic panel to reduce the damage caused by a hail event. The present invention also concerns an associated computer program product. The present invention also relates to an associated readable information carrier.

BACKGROUND OF THE INVENTION

The production of electricity from renewable energy sources is essential for our societies. To this end, dedicated installations have been developed, in particular photovoltaic installations, which allow electricity to be produced from solar energy. Photovoltaic installations typically comprise several photovoltaic panels which are deployed over the surface of a given area.

Fields are areas of interest for the installation of photovoltaic panels because of the large area of such fields. Hence, the photovoltaic panels can coexist with crops of a field.

In such areas, the photovoltaic panels, as well as the crops, are subject to hail events, which can severely damage them.

The crops are sometimes disposed under the photovoltaic panels so as to protect them from a hail event.

Nevertheless, depending on the orientation of the hail and the position of the panels when those ones are not fixed, the crops can still be damaged. In addition, this does not prevent the photovoltaic panels from being damaged.

SUMMARY OF THE INVENTION

There exists a need for a means enabling to reduce the damages caused by a hail event on both photovoltaic panels and elements underneath the photovoltaic panel.

To this end, the invention relates to a method for determining an orientation of a photovoltaic panel to reduce the damage caused by a hail event, the method being computer-implemented and comprising the following phases:

-    receiving input data relative to characteristics of a hail event, the input data comprising at least the mass of a hailstone and a hailstone velocity vector, and
-    determining an orientation of the photovoltaic panel as a function of the input data, in order to protect elements underneath the photovoltaic panel while preventing damages to occur on the photovoltaic panel, the determined orientation corresponding to an intermediate orientation of the photovoltaic panel between a plurality of possible intermediate orientations, each possible intermediate orientation being such that the angle, called hail impact angle, between the normal to the surface of the photovoltaic panel and the hailstone velocity vector, is strictly comprised between 0 degrees and 90 degrees modulo $\pi$, the orientation of the photovoltaic panel corresponding to a hail impact angle of 0 degrees enabling to maximize the protection of elements underneath the photovoltaic panel without preventing damages to occur on the photovoltaic panel, the orientation of the photovoltaic panel corresponding to a hail impact angle of 90 degrees enabling to maximize the prevention of damages on the photovoltaic panel without protecting elements underneath the photovoltaic panel.

The method according to the invention may comprise one or more of the following features considered alone or in any combination that is technically possible:

-    the method comprises a phase of sending a command to an actioner of the photovoltaic panel enabling to adapt the orientation of the photovoltaic panel in conformity with the determined orientation;
-    the determination phase comprises the determination of the orientation of the photovoltaic panel so as to fulfill a kinetic energy criterion, the kinetic energy criterion stating that the kinetic energy received by the photovoltaic panel from a hailstone is below a maximum predetermined kinetic energy, enabling to prevent damages to occur on the photovoltaic panel;
-    the determination phase comprises the steps of:

    -    calculating the hailstone maximum velocity corresponding to the maximum predetermined kinetic energy,
    -    calculating the hailstone velocity as a function of the input data,
    -    comparing the hailstone velocity to the hailstone maximum velocity, and
    -    determining the orientation of the photovoltaic panel as a function of the input data and of the result of the comparison;

- when the hailstone velocity is above the hailstone maximum velocity, the step of determining the orientation of the photovoltaic panel comprises calculating the minimum allowable hailstone impact angle on the basis of the hailstone maximum velocity and the hailstone velocity, and calculating the orientation of the photovoltaic panel as a function of the minimum allowable hailstone impact angle and of the input data;

- the orientation of the photovoltaic panel is quantified by a tilt angle for the photovoltaic panel and an azimuth angle for the photovoltaic panel enabling to perform dual axis tracking, the step of determining the orientation of the photovoltaic panel comprising fixing one of the two angles and determining the other angle depending on the input data and of the result of the comparison;

- the input data also comprise the azimuth of the wind, the step of determining the orientation of the photovoltaic panel comprising setting the tilt angle of the photovoltaic panel at a given value, and

  - when the hailstone velocity is above the hailstone maximum velocity, determining two solutions for the azimuth angle as a function of the following equation:

$$\gamma_{poa} = \gamma_w \pm \left( \frac{\left( \cos\left(\theta_{hail,poa,min}\right) - \cos\left(\beta_{poa}\right)\cos\left(\theta_{hail}\right) \right)}{\sin\left(\beta_{poa}\right)\sin\left(\theta_{hail}\right)} \right)$$

  where:

  - $\gamma_{poa}$ is the azimuth angle of the photovoltaic panel,
  - $\gamma_w$ is the azimuth of the wind,
  - $\theta_{hail,poa,min}$ is the minimum allowable hailstone impact angle,
  - $\theta_{hail}$ is the angle between the hailstone velocity vector and a vertical axis, and
  - $\beta_{poa}$ is the tilt angle of the photovoltaic panel,

    - when the hailstone velocity is below the hailstone maximum velocity, setting the azimuth angle of the photovoltaic panel as being equal to the azimuth of the wind;

- the tilt angle of the photovoltaic panel is set as being equal to the hailstone velocity angle, the hailstone velocity angle being the angle between the hailstone velocity vector and a vertical axis;

- the input data also comprise the azimuth of the wind, the step of determining the orientation of the photovoltaic panel comprising setting the azimuth angle of the photovoltaic panel at a given value, and

  - when the hailstone velocity is above the hailstone maximum velocity, determining two solutions for the tilt angle as a function of the following equation:

$$\cos\left(\theta_{hail,poa,min}\right) = \cos\left(\beta_{poa}\right)\cos\left(\theta_{hail}\right) + \sin\left(\beta_{poa}\right)\sin\left(\theta_{hail}\right)\cos\left(\gamma_w - \gamma_{poa}\right)$$

  where:

  - $\gamma_{poa}$ is the azimuth angle of the photovoltaic panel,
  - $\gamma_w$ is the azimuth of the wind,
  - $\theta_{hail,poa,min}$ is the minimum allowable hailstone impact angle,
  - $\theta_{hail}$ is the angle between the hailstone velocity vector and a vertical axis, and
  - $\beta_{poa}$ is the tilt angle of the photovoltaic panel,

    - when the hailstone velocity is below the hailstone maximum velocity, setting the tilt angle of the photovoltaic panel as being equal to the hailstone velocity angle, the hailstone velocity angle being the angle between the hailstone velocity vector and a vertical axis;

- the azimuth angle of the photovoltaic panel is set as being equal to the azimuth of the wind;

- the orientation of the photovoltaic panel is quantified by an angle of rotation of a single axis oriented at a tilt angle and at an azimuth angle, enabling to perform single axis tracking, the step of determining the orientation of the photovoltaic panel comprising :

  - when the hailstone velocity is below the hailstone maximum velocity, the hail impact angle, between the normal, to the surface of the photovoltaic panel and the hailstone velocity vector is calculated the following way:

$$\theta_{\text{hail,poa}} = \cos^{-1}\big(\cos\omega_{\text{prot}}\,(\cos\beta_{\text{axis}}\cos\theta_{\text{hail}} + \sin\beta_{\text{axis}}\sin\theta_{\text{hail}}\cos(\gamma_{\text{w}} - \gamma_{\text{axis}})) +$$

$$\sin\omega_{\text{prot}}\sin\theta_{\text{hail}}\sin(\gamma_{\text{w}} - \gamma_{\text{axis}})\big),$$

$$\omega_{\text{prot}} = \tan^{-1}(X) + \tau = \tan^{-1}\left(\frac{\sin\theta_{\text{hail}}\cos(\gamma_{\text{w}}-\gamma_{\text{axis}})}{\cos\beta_{\text{axis}}\cos\theta_{\text{hail}}+\sin\beta_{\text{axis}}\sin\theta_{\text{hail}}\cos(\gamma_{\text{w}}-\gamma_{\text{axis}})}\right) + \tau,$$

where

$$\tau = \begin{cases} 0°, \text{ if X=0, or if X>0 and } (\gamma_{\text{w}} - \gamma_{\text{axis}})>0, \text{ or if X<0 and } (\gamma_{\text{w}} - \gamma_{\text{axis}})<0 \\ +180°, \text{ if X<0 and } (\gamma_{\text{w}} - \gamma_{\text{axis}})>0 \\ -180°, \text{ if X>0 and } (\gamma_{\text{w}} - \gamma_{\text{axis}})<0 \end{cases}$$

where:

- $\omega_{\text{prot}}$ is the protection angle of rotation of the single axis,
- $\beta_{\text{axis}}$ is the tilt angle of the single axis,
- $\gamma_{\text{axis}}$ is the azimuth angle of the single axis,
- $\gamma_{w}$ is the azimuth of the wind,
- $\theta_{hail,poa,min}$ is the minimum allowable hailstone impact angle, and
- $\theta_{hail}$ is the angle between the hailstone velocity vector and a vertical axis,

- when the hailstone velocity is below the hailstone maximum velocity, and consequently, when the hail impact angle, between the normal, to the surface of the photovoltaic panel and the hailstone velocity vector, is always greater than or equal to the minimum allowable hailstone impact angle, the rotation angle of the single axis is set as being equal to the value;
- when the hail impact angle, between the normal to the surface of the photovoltaic panel, which is rotated at $\omega_{\text{prot}}$, and the hailstone velocity vector, is below the minimum allowable hailstone impact angle, two solutions are determined for the rotation angle $\omega$ of the single axis as a function of the following equation:

$$\theta_{\text{hail,poa,min}} = \cos^{-1}(\cos\omega\,(\cos\beta_{\text{axis}}\cos\theta_{\text{hail}} + \sin\beta_{\text{axis}}\sin\theta_{\text{hail}}\cos(\gamma_{\text{w}} - \gamma_{\text{axis}}))$$

$$+ \sin\omega\sin\theta_{\text{hail}}\sin(\gamma_{\text{w}} - \gamma_{\text{axis}}))$$

where:

- $\omega$ is the angle of rotation of the single axis.

- the hailstone velocity vector comprises a vertical velocity component and a horizontal velocity component, the horizontal velocity component being approximated as being the velocity of the wind;
- the vertical velocity component is obtained on the basis of the following formula:

$$u_z = \sqrt{\frac{8 \times \rho_{hail} \times R_{hail} \times g}{3 \times \rho_{air} \times 0.44}}$$

Where:

- $\rho_{hail}$ is the density of the hail,
- $R_{hail}$ is the radius of the hail,
- $g$ is the acceleration of gravity, and
- $\rho_{air}$ is the density of air.

The invention also relates to a computer program product comprising a readable information carrier having stored thereon a computer program comprising program instructions, the computer program being loadable onto a data processing unit and causing a method as previously described to be carried out when the computer program is carried out on the data processing unit.

The invention also relates to a readable information carrier on which is stored a computer program product as previously described.

BRIEF DESCRIPTION OF THE DRAWINGS

The invention will be easier to understand in view of the following description, provided solely as an example and with reference to the appended drawings in which:

- Figure 1 is a schematic view of an example of a photovoltaic panel under which there are crops, the orientation of the photovoltaic panel being controlled by an actioner as a function of a command received from a calculator,
- Figure 2 is a flowchart of an example of implementation of a method for determining an orientation of a photovoltaic panel to reduce the damage caused by a hail event,
- Figure 3 is a schematic representation of a photovoltaic panel and of a hailstone arriving on the photovoltaic panel, such representation illustrating the vectors and angles considered in some calculations, and
- Figure 4 is a schematic representation of a photovoltaic panel in a one-axis tracking geometry.

DETAILED DESCRIPTION OF SOME EMBODIMENTS

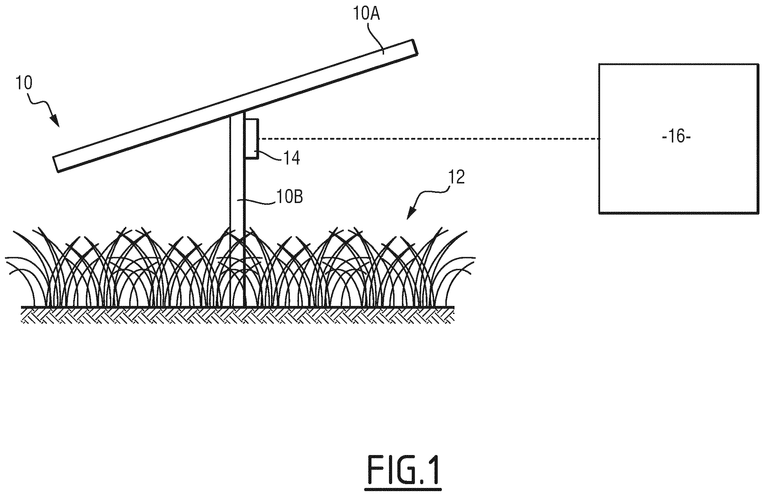

A photovoltaic panel 10 protecting elements 12, which are under the photovoltaic panel 10, is illustrated on figure 1. On this figure 1, the orientation of the photovoltaic panel 10 is controlled by an actioner 14 receiving a command from a calculator 16.

The elements 12 are for example crops, such as vegetable, fruits, trees or flowers. More generally, the elements 12 can also be cars or anything of value that may be damaged by hail.

The photovoltaic panel 10 comprises a photovoltaic surface 10A and a mounting structure 10B. The photovoltaic surface 10A defines a plane, called POA in what follows. The photovoltaic surface 10A is a surface at the front or at the rear of the photovoltaic panel 10. The photovoltaic surface 10A is typically composed of several photovoltaic modules, each photovoltaic module comprising several photovoltaic cells.

The mounting structure 10B is suitable to be moved by the actioner 14 so as to move the photovoltaic surface 10A.

The actioner 14 is suitable for two-axis tracking or for one-axis tracking depending on the nature of the photovoltaic panel 10.

A one-axis tracking (or single-axis tracking) implies a move on only one axis of movement, while two-axis tracking (or dual-axis tracking) implies a move on two axes. Solar panels with a single-axis tracker usually only move from East to West, whereas solar panels with a dual-axis tracker usually move from East to West and from North to South.

The calculator 16 is preferably a computer.

More generally, the controller 16 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

For example, the calculator 16 comprises a processor comprising a data processing unit, memories and a reader for information media, and eventually, a human machine interface, such as a keyboard, and a display.

In an example of implementation, the calculator 16 interacts with a computer program product. The computer program product comprises an information medium.

The information medium is a medium readable by the calculator 16, usually by the data processing unit. The readable information medium is a medium suitable for storing electronic instructions and capable of being coupled to a computer system bus.

By way of example, the information medium is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium is stored the computer program comprising program instructions.

The computer program is loadable on the data processing unit and is adapted to entail the implementation of a method for determining an orientation of the photovoltaic panel 10 to reduce the damage caused by a hail event, when the computer program is loaded on the processing unit of the calculator 16.

In a variant, the computer program is stored on a cloud accessible through a server.

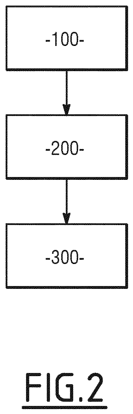

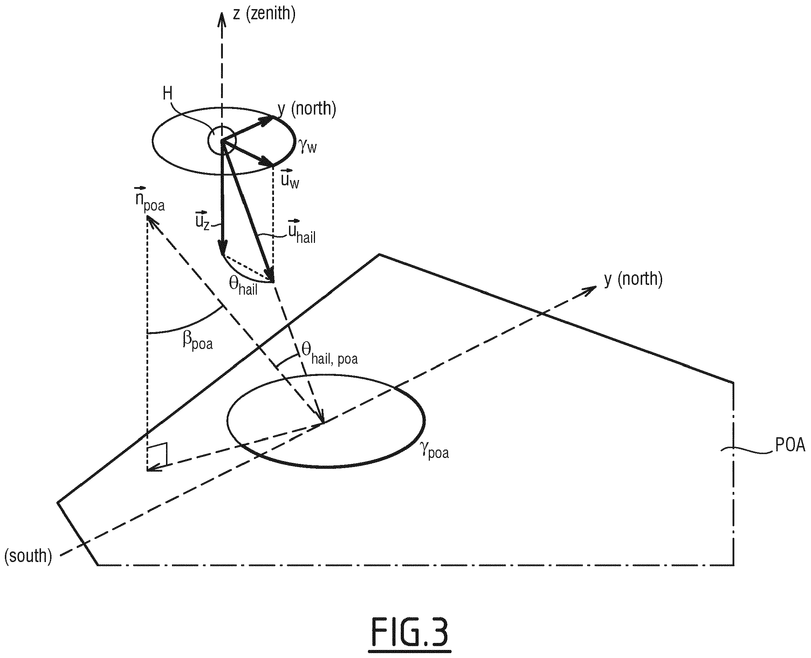

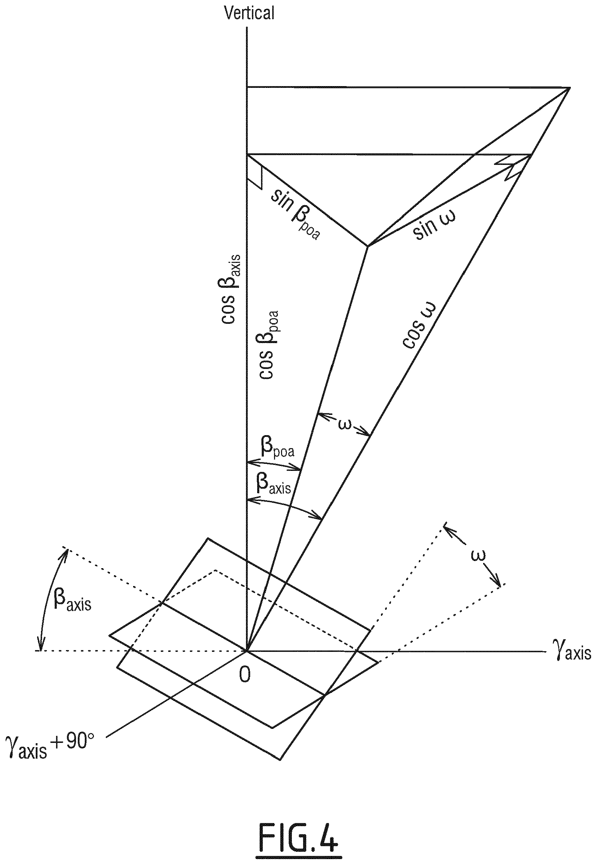

Operation of the calculator 16 will now be described with reference to figure 2, which diagrammatically illustrates an example of implementation of a method for determining an orientation of the photovoltaic panel 10 to reduce the damage caused by a hail event, and to figures 3 and 4 which illustrate in more detail some notations used when implementing the method.

The steps of the determination method are, for example, implemented by the calculator 16 in interaction with the computer program product, that is to say are implemented by a computer.

The determination method comprises a phase 100 for receiving input data relative to characteristics of a hail event.

The input data comprise at least the mass $m_{\text{hail}}$ of a hailstone and a hailstone velocity vector $\overrightarrow{u_{hail}}$.

The hailstone velocity vector $\overrightarrow{u_{hail}}$ comprises a vertical velocity component $u_z$ and a horizontal velocity component $u_x$. Preferably, the horizontal velocity component is approximated as being the velocity of the wind $u_x$.

In an example, the vertical velocity component $u_z$ is obtained on the basis of the following formula:

$$u_z = \sqrt{\frac{8 \times \rho_{hail} \times R_{hail} \times g}{3 \times \rho_{air} \times 0.44}} \tag{1}$$

Where:

- $\rho_{hail}$ is the density of the hail,
- $R_{hail}$ is the radius of the hail,
- $g$ is the acceleration of gravity, and
- $\rho_{air}$ is the density of air.

In a variant or in complement, the input data are for example obtained through weather forecast or local measurements (onsite measurements carried out in real time or not).

The determination method comprises a phase 200 for determining an orientation of the photovoltaic panel 10 as a function of the input data, in order to protect elements 12 underneath the photovoltaic panel 10 while preventing damages to occur on the photovoltaic panel 10.

The determined orientation corresponds to an intermediate orientation of the photovoltaic panel 10 between a plurality of possible intermediate orientations. Each possible intermediate orientation is such that the angle, called hail impact angle $\theta_{hail,poa}$, between the normal $\overrightarrow{n_{poa}}$, to the surface of the photovoltaic panel 10 and the hailstone velocity vector $\overrightarrow{u_{hail}}$ is strictly comprised between 0 degrees and 90 degrees modulo $\pi$.

The orientation of the photovoltaic panel 10 corresponding to a hail impact angle $\theta_{hail,poa}$ of 0 degrees. enables to maximize the protection of elements 12 underneath the photovoltaic panel 10, without preventing damages to occur on the photovoltaic panel 10 (the kinetic energy E received by the photovoltaic panel 10 is maximized). The orientation of the photovoltaic panel 10 corresponding to a hail impact angle $\theta_{hail,poa}$ of 90 degrees enables to maximize the prevention of damages on the photovoltaic panel 10, without protecting elements 12 underneath the photovoltaic panel 10 (the kinetic energy E received by the photovoltaic panel 10 is minimized).

Preferably, the determination phase 200 comprises the determination of the orientation of the photovoltaic panel 10 so as to fulfill a kinetic energy criterion. The kinetic energy criterion states that the kinetic energy E received by the photovoltaic panel 10 from a hailstone is below a maximum predetermined kinetic energy Emax, enabling to prevent damages to occur on the photovoltaic panel 10 (but without going to an orientation of the photovoltaic panel 10 corresponding to a hail impact angle $\theta_{hail,poa}$ equal to 90°, because this would damage the crops).

The maximum predetermined kinetic energy Emax is for example determined experimentally or is obtained from manufacturer data. The maximum predetermined kinetic energy Emax is for example equal to 0.8 Joules. However, this value depends on the type of the photovoltaic panel 10.

In particular, the kinetic energy E received by the photovoltaic panel 10 from a hailstone depends on the hail impact angle $\theta_{hail,poa}$. The greater the hail impact angle $\theta_{hail,poa}$, the lower the kinetic energy E received by the photovoltaic panel 10, and vice versa.

In an example of implementation, the determination phase 200 comprises:

- a step of calculating the hailstone maximum velocity $u_{hail,poa,max}$ corresponding to the maximum predetermined kinetic energy Emax. For example, the hailstone maximum velocity $u_{hail,poa,max}$ is given by the following formula:

$$u_{\text{hail,poa,max}} = \sqrt{2\,E_{\text{max}}/m_{\text{hail}}} \tag{2}$$

- a step of calculating the hailstone velocity $u_{hail}$ as a function of the input data. For example, the hailstone velocity $u_{hail}$ is given by the following formula:

$$u_{hail} = \sqrt{u_x^2 + u_z^2} \qquad (3)$$

where $u_x$ is the horizontal velocity component which is approximated as being the velocity of the wind ($u_x = u_w$) and $u_z$ is the vertical velocity component, both $u_w$ and $u_z$ being given by the input data.
- a step of comparing the hailstone velocity $u_{hail}$ to the hailstone maximum velocity $u_{hail,poa,max}$, and
- a step of determining the orientation of the photovoltaic panel 10 as a function of the input data and of the result of the comparison.

In particular, when the hailstone velocity $u_{hail}$ is above the hailstone maximum velocity $u_{hail,poa,max}$, the step of determining the orientation of the photovoltaic panel 10 comprises calculating the minimum allowable hailstone impact angle $\theta_{hail,poa,min}$ on the photovoltaic panel 10, on the basis of the hailstone maximum velocity $u_{hail,poa,max}$ and the hailstone velocity $u_{hail}$. The minimum allowable hailstone impact angle $\theta_{hail,poa,min}$ is for example given by the following formula:

$$\theta_{hail,poa,min} = \cos^{-1}\big(\min(1, u_{hail,poa,max}/u_{hail})\big) \qquad (4)$$

The orientation of the photovoltaic panel 10 is then calculated as a function of the minimum allowable hailstone impact angle $\theta_{hail,poa,min}$ and of the input data.
Three examples of embodiments corresponding to the calculation of the orientation of the photovoltaic panel 10 as a function of the minimum allowable hailstone impact angle $\theta_{hail,poa,min}$ and of the input data, will now be described. In addition, figure 3 illustrates the notations used in the above calculations and in the calculations hereinafter, POA being the plane of the photovoltaic surface 10A of the photovoltaic panel 10 and H being a hailstone. Figure 4 is specific to the third embodiment.

### 1st embodiment: dual axis tracking at a given $\beta_{poa}$ (e.g., $\beta_{poa} = \theta_{hail}$)

In this embodiment, the input data also comprise the azimuth $\gamma_w$ of the wind (also called wind direction). Such data is for example obtained through weather forecast or local measurements (onsite measurements carried out in real time or not).
In the first embodiment, the orientation of the photovoltaic panel 10 is quantified by a tilt angle $\beta_{poa}$ for the photovoltaic panel 10 and an azimuth angle $\gamma_{poa}$ for the photovoltaic panel 10 enabling to perform dual axis tracking. The tilt angle $\beta_{poa}$ is the angle between the normal $\overrightarrow{n_{poa}}$ to the surface of the photovoltaic panel 10 and a vertical axis. The azimuth angle $\gamma_{poa}$ is the angle in a horizontal plane between a reference direction (for example, the north) and the projection of the normal $\overrightarrow{n_{poa}}$ to the surface of the photovoltaic panel 10 in the horizontal plane.
The step of determining the orientation of the photovoltaic panel 10 comprises fixing one of the two angles and determining the other angle depending on the input data and of the result of the comparison between the hailstone velocity $u_{hail}$ and the hailstone maximum velocity $u_{hail,poa,max}$. In this embodiment, the tilt angle $\beta_{poa}$ of the photovoltaic panel 10 is set at a given value. In an example, the tilt angle $\beta_{poa}$ is set as being equal to the angle $\theta_{hail}$ between the hailstone velocity vector $\overrightarrow{u_{hail}}$ and a vertical axis.
In this embodiment, when the hailstone velocity $u_{hail}$ is above the hailstone maximum velocity $u_{hail,poa,max}$, two solutions are determined for the azimuth angle $\gamma_{poa}$ as a function of the following equation:

$$\gamma_{poa} = \gamma_w \pm \left(\frac{(\cos(\theta_{hail,poa,min}) - \cos(\beta_{poa})\cos(\theta_{hail}))}{\sin(\beta_{poa})\sin(\theta_{hail})}\right) \qquad (5)$$

where:

- $\gamma_{poa}$ is the azimuth angle of the photovoltaic panel 10,
- $\gamma_w$ is the azimuth of the wind,
- $\theta_{hail,poa,min}$ is the minimum allowable hailstone impact angle,
- $\theta_{hail}$ is the angle between the hailstone velocity vector $\overrightarrow{u_{hail}}$ and a vertical axis, with $\theta_{hail} = \tan^{-1}(u_w/u_z)$, $u_w$ being the horizontal velocity component which is approximated as being the velocity of the wind, and $u_z$ being the vertical velocity component, and

- $\beta_{poa}$ is the tilt angle of the photovoltaic panel 10.

Preferably, the azimuth angle $\gamma_{poa}$ corresponding to the solution the closest from the solar azimuth angle is selected. This enables to minimize the solar angle of incidence, and thus to maximize the photovoltaic power generation.

When the hailstone velocity $u_{hail}$ is below the hailstone maximum velocity $u_{hail,poa,\max}$, the azimuth angle $\gamma_{poa}$ of the photovoltaic panel 10 is set as being equal to the azimuth of the wind $\gamma_{w}$.

**2nd embodiment: dual axis tracking at a given $\gamma_{poa}$ (e.g., $\gamma_{poa} = \gamma_{w}$)**

In this embodiment, the input data also comprise the azimuth of the wind $\gamma_{w}$. Such data is for example obtained through weather forecast or local measurements (onsite measurements carried out in real time or not).

In the second embodiment, as in the first embodiment, the orientation of the photovoltaic panel 10 is quantified by a tilt angle $\beta_{poa}$ for the photovoltaic panel 10 and an azimuth angle $\gamma_{poa}$ for the photovoltaic panel 10, enabling to perform dual axis tracking.

The step of determining the orientation of the photovoltaic panel 10 comprises fixing one of the two angles and determining the other angle depending on the input data and of the result of the comparison between the hailstone velocity $u_{hail}$ and the hailstone maximum velocity $u_{hail,poa,\max}$. In this embodiment, the azimuth angle $\gamma_{poa}$ of the photovoltaic panel 10 is set at a given value. In an example, the azimuth angle $\gamma_{poa}$ is set as being equal to the azimuth of the wind $\gamma_{w}$.

In this embodiment, when the hailstone velocity $u_{hail}$ is above the hailstone maximum velocity $u_{hail,poa,\max}$, two solutions are determined for the tilt angle $\beta_{poa}$ as a function of the following equation:

$$\cos\left(\theta_{hail,poa,min}\right) = \cos\left(\beta_{poa}\right)\cos\left(\theta_{hail}\right) + \sin\left(\beta_{poa}\right)\sin(\theta_{hail})\cos(\gamma_{w} - \gamma_{poa}) \quad (6)$$

where:

- $\gamma_{poa}$ is the azimuth angle of the photovoltaic panel 10,
- $\gamma_{w}$ is the azimuth of the wind,
- $\theta_{hail,poa,min}$ is the minimum allowable hailstone impact angle,
- $\theta_{hail}$ is the angle between the hailstone velocity vector $\overrightarrow{u_{hail}}$ and a vertical axis, and
- $\beta_{poa}$ is the tilt angle of the photovoltaic panel 10.

Preferably, the tilt angle $\beta_{poa}$ corresponding to the solution the closest from the solar zenith angle is selected. This enables to minimize the solar angle of incidence, and thus to maximize the photovoltaic power generation.

When the hailstone velocity $u_{hail}$ is below the hailstone maximum velocity $u_{hail,poa,\max}$, the tilt angle $\beta_{poa}$ of the photovoltaic panel 10 is set as being equal to the hailstone velocity angle $\theta_{hail}$. The hailstone velocity angle $\theta_{hail}$ is the angle between the hailstone velocity vector $\overrightarrow{u_{hail}}$ and the vertical axis. The hailstone velocity angle $\theta_{hail}$ is obtained from the input data (the hailstone velocity angle $\theta_{hail}$ is derived from the hailstone velocity vector $\overrightarrow{u_{hail}}$).

**3rd embodiment: single axis tracking with the axis tilted at $\beta_{axis}$ from horizontal and azimuthally oriented at $\gamma_{axis}$**

In the third embodiment, the orientation of the photovoltaic panel 10 is controlled by an angle of rotation $\omega$ of a single axis oriented at a tilt angle $\beta_{axis}$ and at an azimuth angle $\gamma_{axis}$, enabling to perform single axis tracking.

When the hailstone velocity $u_{hail}$ is below the hailstone maximum velocity $u_{hail,poa,\max}$, the hail impact angle $\theta_{hail,poa}$, between the normal $\overrightarrow{n_{poa}}$ to the surface of the photovoltaic panel 10 and the hailstone velocity vector $\overrightarrow{u_{hail}}$, is calculated the following way:

$$\theta_{hail,poa} = \cos^{-1}\left(\cos\omega_{prot}\left(\cos\beta_{axis}\cos\theta_{hail} + \sin\beta_{axis}\sin\theta_{hail}\cos(\gamma_{w} - \gamma_{axis})\right) + \right.$$
$$\left. \sin\omega_{prot}\sin\theta_{hail}\sin(\gamma_{w} - \gamma_{axis})\right) \quad (7)$$

where

$$\omega_{prot} = \tan^{-1}(X) + \tau = \tan^{-1}\left(\frac{\sin\theta_{hail}\cos(\gamma_{w}-\gamma_{axis})}{\cos\beta_{axis}\cos\theta_{hail}+\sin\beta_{axis}\sin\theta_{hail}\cos(\gamma_{w}-\gamma_{axis})}\right) + \tau,$$

where

$$\tau = \begin{cases} 0°, \text{ if } X=0, \text{ or if } X>0 \text{ and } (\gamma_{\mathrm{w}} - \gamma_{\mathrm{axis}})>0, \text{ or if } X<0 \text{ and } (\gamma_{\mathrm{w}} - \gamma_{\mathrm{axis}})<0 \\ +180°, \text{ if } X<0 \text{ and } (\gamma_{\mathrm{w}} - \gamma_{\mathrm{axis}})>0 \\ -180°, \text{ if } X>0 \text{ and } (\gamma_{\mathrm{w}} - \gamma_{\mathrm{axis}})<0 \end{cases}$$

where:

- $\omega_{\mathrm{prot}}$ is the protection angle of rotation of the single axis,
- $\beta_{\mathrm{axis}}$ is the tilt angle of the single axis,
- $\gamma_{\mathrm{axis}}$ is the azimuth angle of the single axis,
- $\gamma_w$ is the azimuth of the wind, and
- $\theta_{hail}$ is the angle between the hailstone velocity vector $\overrightarrow{u_{hail}}$ and a vertical axis.

When the hailstone velocity $u_{hail}$ is below the hailstone maximum velocity $u_{hail,poa,\mathrm{max}}$, and consequently, when the hail impact angle $\theta_{hail,poa}$, between the normal $\overrightarrow{n_{poa}}$, to the surface of the photovoltaic panel 10 and the hailstone velocity vector $\overrightarrow{u_{hail}}$, is always greater than or equal to the minimum allowable hailstone impact angle $\theta_{hail,poa,\mathrm{min}}$, the rotation angle of the single axis is set as being equal to the value $\omega_{\mathrm{prot}}$.

When the hail impact angle $\theta_{hail,poa}$, between the normal $\overrightarrow{n_{poa}}$ to the surface of the photovoltaic panel 10, which is rotated at $\omega_{\mathrm{prot}}$, and the hailstone velocity vector $\overrightarrow{u_{hail}}$, is below the minimum allowable hailstone impact angle $\theta_{hail,poa,\mathrm{min}}$, two solutions are determined for the rotation angle $\omega$ of the single axis as a function of the following equation:

$$\theta_{\mathrm{hail,poa,min}} = \cos^{-1}(\cos\omega\,(\cos\beta_{\mathrm{axis}}\cos\theta_{\mathrm{hail}} + \sin\beta_{\mathrm{axis}}\sin\theta_{\mathrm{hail}}\cos(\gamma_{\mathrm{w}} - \gamma_{\mathrm{axis}})) +$$

$$\sin\omega\sin\theta_{\mathrm{hail}}\sin(\gamma_{\mathrm{w}} - \gamma_{\mathrm{axis}})) \qquad (8)$$

where:

- $\omega$ is the angle of rotation of the single axis.

Preferably, out of the two solutions the one that minimizes the solar angle of incidence is selected. This enables to maximize the photovoltaic power generation.

Hence, each of these three embodiments enable to obtain an orientation for the photovoltaic panel 10 with different piloting modes, so as to prevent hail damage.

In operation, the determination method also comprises a phase 300 for sending a command to the actioner 14 of the photovoltaic panel 10 enabling to adapt the orientation of the photovoltaic panel 10 in conformity with the determined orientation. Such an actioner 14 then modifies the orientation of the photovoltaic panel.

Such a method could be applied to a whole array of photovoltaic panels.

Hence, the determination method enables to determine an orientation of the photovoltaic panel 10 enabling to reduce the damages caused by a hail event on both the photovoltaic panel 10 and crops. In particular, a balance is found between the prevention of the damages of the photovoltaic panel 10 and the prevention of the damages of the crops or any other elements underneath the photovoltaic panel 10.

The person skilled in the art will understand that the embodiments and variants described above can be combined to form new embodiments provided that they are technically compatible.

## Claims

1. A method for determining an orientation of a photovoltaic panel (10) to reduce the damage caused by a hail event, the method being computer-implemented and comprising the following phases:

    - receiving input data relative to characteristics of a hail event, the input data comprising at least the mass ($m_{hail}$) of a hailstone and a hailstone velocity vector ($\overrightarrow{u_{hail}}$), and
    - determining an orientation of the photovoltaic panel (10) as a function of the input data, in order to protect elements (12) underneath the photovoltaic panel (10) while preventing damages to occur on the photovoltaic panel (10), the determined orientation corresponding to an intermediate orientation of the photovoltaic panel (10)

between a plurality of possible intermediate orientations, each possible intermediate orientation being such that the angle, called hail impact angle ($\theta_{hail,poa}$), between the normal ($\overrightarrow{n_{poa}}$) to the surface of the photovoltaic panel (10) and the hailstone velocity vector ($\overrightarrow{u_{hail}}$), is strictly comprised between 0 degrees and 90 degrees modulo $\pi$, the orientation of the photovoltaic panel (10) corresponding to a hail impact angle ($\theta_{hail,poa}$) of 0 degrees enabling to maximize the protection of elements (12) underneath the photovoltaic panel (10) without preventing damages to occur on the photovoltaic panel (10), the orientation of the photovoltaic panel (10) corresponding to a hail impact angle ($\theta_{hail,poa}$) of 90 degrees enabling to maximize the prevention of damages on the photovoltaic panel (10) without protecting elements (12) underneath the photovoltaic panel (10).

2. A method according to claim 1, wherein the method comprises a phase of sending a command to an actioner (14) of the photovoltaic panel (10) enabling to adapt the orientation of the photovoltaic panel (10) in conformity with the determined orientation.

3. A method according to claim 1 or 2, wherein the determination phase comprises the determination of the orientation of the photovoltaic panel (10) so as to fulfill a kinetic energy criterion, the kinetic energy criterion stating that the kinetic energy (E) received by the photovoltaic panel (10) from a hailstone is below a maximum predetermined kinetic energy (Emax), enabling to prevent damages to occur on the photovoltaic panel (10).

4. A method according to claim 3, wherein the determination phase comprises the steps of :

- calculating the hailstone maximum velocity ($u_{hail,poa,max}$) corresponding to the maximum predetermined kinetic energy (Emax),
- calculating the hailstone velocity ($u_{hail}$) as a function of the input data,
- comparing the hailstone velocity ($u_{hail}$) to the hailstone maximum velocity ($u_{hail,poa,max}$), and
- determining the orientation of the photovoltaic panel (10) as a function of the input data and of the result of the comparison.

5. A method according to claim 4, wherein when the hailstone velocity ($u_{hail}$) is above the hailstone maximum velocity ($u_{hail,poa,max}$), the step of determining the orientation of the photovoltaic panel (10) comprises calculating the minimum allowable hailstone impact angle ($\theta_{hail,poa,min}$) on the basis of the hailstone maximum velocity ($u_{hail,poa,max}$) and the hailstone velocity ($u_{hail}$), and calculating the orientation of the photovoltaic panel (10) as a function of the minimum allowable hailstone impact angle ($\theta_{hail,poa,min}$) and of the input data.

6. A method according to claim 5, wherein the orientation of the photovoltaic panel (10) is quantified by a tilt angle ($\beta_{poa}$) for the photovoltaic panel (10) and an azimuth angle ($\gamma_{poa}$) for the photovoltaic panel (10) enabling to perform dual axis tracking, the step of determining the orientation of the photovoltaic panel (10) comprising fixing one of the two angles and determining the other angle depending on the input data and of the result of the comparison.

7. A method according to claim 6, wherein the input data also comprise the azimuth of the wind ($\gamma_w$), the step of determining the orientation of the photovoltaic panel (10) comprising setting the tilt angle ($\beta_{poa}$) of the photovoltaic panel (10) at a given value, and

- when the hailstone velocity ($u_{hail}$) is above the hailstone maximum velocity ($u_{hail,poa,max}$), determining two solutions for the azimuth angle ($\gamma_{poa}$) as a function of the following equation:

$$\gamma_{poa} = \gamma_w \pm \left( \frac{\left(\cos\left(\theta_{hail,poa,min}\right) - \cos\left(\beta_{poa}\right)\cos(\theta_{hail})\right)}{\sin\left(\beta_{poa}\right)\sin(\theta_{hail})} \right)$$

where:

- $\gamma_{poa}$ is the azimuth angle of the photovoltaic panel (10),
- $\gamma_w$ is the azimuth of the wind,
- $\theta_{hail,poa,min}$ is the minimum allowable hailstone impact angle,
- $\theta_{hail}$ is the angle between the hailstone velocity vector ($\overrightarrow{u_{hail}}$) and a vertical axis, and
- $\beta_{poa}$ is the tilt angle of the photovoltaic panel (10),
- when the hailstone velocity ($u_{hail}$) is below the hailstone maximum velocity ($u_{hail,poa,max}$), setting the azimuth

angle ($\gamma_{\text{poa}}$) of the photovoltaic panel (10) as being equal to the azimuth of the wind ($\gamma_{\text{w}}$).

8. A method according to claim 7, wherein the tilt angle ($\beta_{\text{poa}}$) of the photovoltaic panel (10) is set as being equal to the hailstone velocity angle ($\theta_{hail}$), the hailstone velocity angle ($\theta_{hail}$) being the angle between the hailstone velocity vector ($\overrightarrow{u_{hail}}$) and a vertical axis.

9. A method according to claim 6, wherein the input data also comprise the azimuth of the wind ($\gamma_{\text{w}}$), the step of determining the orientation of the photovoltaic panel (10) comprising setting the azimuth angle ($\gamma_{\text{poa}}$) of the photovoltaic panel (10) at a given value, and

- when the hailstone velocity ($u_{hail}$) is above the hailstone maximum velocity ($u_{hail,poa,max}$), determining two solutions for the tilt angle ($\beta_{\text{poa}}$) as a function of the following equation:

$$\cos(\theta_{hail,poa,min}) = \cos(\beta_{poa})\cos(\theta_{hail}) + \sin(\beta_{poa})\sin(\theta_{hail})\cos(\gamma_w - \gamma_{poa})$$

where:

- $\gamma_{poa}$ is the azimuth angle of the photovoltaic panel (10),
- $\gamma_w$ is the azimuth of the wind,
- $\theta_{hail,poa,min}$ is the minimum allowable hailstone impact angle,
- $\theta_{hail}$ is the angle between the hailstone velocity vector ($\overrightarrow{u_{hail}}$) and a vertical axis, and
- $\beta_{poa}$ is the tilt angle of the photovoltaic panel (10),
- when the hailstone velocity ($u_{hail}$) is below the hailstone maximum velocity ($u_{hail,poa,max}$), setting the tilt angle ($\beta_{\text{poa}}$) of the photovoltaic panel (10) as being equal to the hailstone velocity angle ($\theta_{hail}$), the hailstone velocity angle ($\theta_{hail}$) being the angle between the hailstone velocity vector ($\overrightarrow{u_{hail}}$) and a vertical axis.

10. A method according to claim 9, wherein the azimuth angle ($\gamma_{\text{poa}}$) of the photovoltaic panel (10) is set as being equal to the azimuth of the wind ($\gamma_{\text{w}}$).

11. A method according to claim 5, wherein the orientation of the photovoltaic panel (10) is quantified by an angle of rotation ($\omega$) of a single axis oriented at a tilt angle ($\beta_{\text{axis}}$) and at an azimuth angle ($\gamma_{\text{axis}}$), enabling to perform single axis tracking, the step of determining the orientation of the photovoltaic panel (10) comprising :

- when the hailstone velocity ($u_{hail}$) is below the hailstone maximum velocity ($u_{hail,poa,max}$), the hail impact angle ($\theta_{hail,poa}$), between the normal ($\overrightarrow{n_{poa}}$), to the surface of the photovoltaic panel (10) and the hailstone velocity vector ($\overrightarrow{u_{hail}}$) is calculated the following way:

$$\theta_{\text{hail,poa}} = \cos^{-1}\big(\cos\omega_{\text{prot}}\left(\cos\beta_{\text{axis}}\cos\theta_{\text{hail}} + \sin\beta_{\text{axis}}\sin\theta_{\text{hail}}\cos(\gamma_{\text{w}} - \gamma_{\text{axis}})\right) +$$

$$\sin\omega_{\text{prot}}\sin\theta_{\text{hail}}\sin(\gamma_{\text{w}} - \gamma_{\text{axis}})\big),$$

$$\omega_{\text{prot}} = \tan^{-1}(X) + \tau = \tan^{-1}\left(\frac{\sin\theta_{\text{hail}}\cos(\gamma_{\text{w}} - \gamma_{\text{axis}})}{\cos\beta_{\text{axis}}\cos\theta_{\text{hail}} + \sin\beta_{\text{axis}}\sin\theta_{\text{hail}}\cos(\gamma_{\text{w}} - \gamma_{\text{axis}})}\right) + \tau,$$

where

$$\tau = \begin{cases} 0°, \text{ if X=0, or if X>0 and } (\gamma_{\text{w}} - \gamma_{\text{axis}})>0, \text{ or if X<0 and } (\gamma_{\text{w}} - \gamma_{\text{axis}})<0 \\ +180°, \text{ if X<0 and } (\gamma_{\text{w}} - \gamma_{\text{axis}})>0 \\ -180°, \text{ if X>0 and } (\gamma_{\text{w}} - \gamma_{\text{axis}})<0 \end{cases}$$

where:

- $\omega_{\text{prot}}$ is the protection angle of rotation of the single axis,
- $\beta_{\text{axis}}$ is the tilt angle of the single axis,

- $\gamma_{\text{axis}}$ is the azimuth angle of the single axis,
- $\gamma_w$ is the azimuth of the wind,
- $\theta_{hail,poa,min}$ is the minimum allowable hailstone impact angle, and
- $\theta_{hail}$ is the angle between the hailstone velocity vector ($\overrightarrow{u_{hail}}$) and a vertical axis,

- when the hailstone velocity ($u_{hail}$) is below the hailstone maximum velocity ($u_{hail,poa,max}$), and consequently, when the hail impact angle ($\theta_{hail,poa}$), between the normal ($\overrightarrow{n_{poa}}$), to the surface of the photovoltaic panel (10) and the hailstone velocity vector ($\overrightarrow{u_{hail}}$), is always greater than or equal to the minimum allowable hailstone impact angle ($\theta_{hail,poa,min}$), the rotation angle of the single axis is set as being equal to the value ($\omega_{\text{prot}}$).

- when the hail impact angle ($\theta_{hail,poa}$), between the normal ($\overrightarrow{n_{poa}}$) to the surface of the photovoltaic panel (10), which is rotated at $\omega_{\text{prot}}$, and the hailstone velocity vector ($\overrightarrow{u_{hail}}$), is below the minimum allowable hailstone impact angle ($\theta_{hail,poa,min}$), two solutions are determined for the rotation angle $\omega$ of the single axis as a function of the following equation:

$$\theta_{\text{hail,poa,min}} = \cos^{-1}(\cos\omega\,(\cos\beta_{\text{axis}}\cos\theta_{\text{hail}} + \sin\beta_{\text{axis}}\sin\theta_{\text{hail}}\cos(\gamma_{\text{w}} - \gamma_{\text{axis}}))$$
$$+ \sin\omega\sin\theta_{\text{hail}}\sin(\gamma_{\text{w}} - \gamma_{\text{axis}}))$$

where:

- $\omega$ is the angle of rotation of the single axis.

12. A method according to any one of claims 1 to 11, wherein the hailstone velocity vector ($\overrightarrow{u_{hail}}$) comprises a vertical velocity component ($u_z$) and a horizontal velocity component ($u_x$), the horizontal velocity component being approximated as being the velocity of the wind ($u_w$).

13. A method according to claim 12, wherein the vertical velocity component is obtained on the basis of the following formula:

$$u_z = \sqrt{\frac{8\,\times\,\rho_{hail}\,\times R_{hail}\times g}{3\times\rho_{air}\times 0.44}}$$

Where:

- $\rho_{hail}$ is the density of the hail,
- $R_{hail}$ is the radius of the hail,
- $g$ is the acceleration of gravity, and
- $\rho_{air}$ is the density of air.

14. A computer program product comprising a readable information carrier having stored thereon a computer program comprising program instructions, the computer program being loadable onto a data processing unit and causing a method according to any one of claims 1 to 13 to be carried out when the computer program is carried out on the data processing unit.

15. A readable information carrier on which a computer program product according to claim 14 is stored.

EP 4 618 409 A1

FIG.1

```
┌───────────────┐
│               │
│     -100-     │
│               │
└───────┬───────┘
        │
        ▼
┌───────────────┐
│               │
│     -200-     │
│               │
└───────┬───────┘
        │
        ▼
┌───────────────┐
│               │
│     -300-     │
│               │
└───────────────┘
```

## FIG.2

## FIG.3

EP 4 618 409 A1

FIG.4

## EUROPEAN SEARCH REPORT

**Application Number**

EP 24 30 5363

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/077813 A1 (RAGHUCHANDRA KARTHIKEYA BALLADI [DK] ET AL) 10 March 2022 (2022-03-10) | 1-4,14, 15 | INV. H02S50/00 |
| A | * paragraphs [0032] - [0081]; claims 1-3; figures 3a-5,8,9 * | 5-13 | |
| A | DAVID R JENKINS ET AL: "Hail impact testing procedure for solar collector cover NBS IR 82-2487", NIST, NATIONAL INSTITUTE OF STANDARDS AND TECHNOLOGY (NIST) , 31 December 1982 (1982-12-31), pages 1-92, XP061041398, DOI: 10.6028/NBS.IR.82-2487 Retrieved from the Internet: URL:https://nvlpubs.nist.gov/nistpubs/Legacy/IR/nbsir82-2487.pdf [retrieved on 1982-12-31] * the whole document * | 1-15 | |

**TECHNICAL FIELDS SEARCHED (IPC)**

H02S

The present search report has been drawn up for all claims

| Place of search | Date of completion of the search | Examiner |
|---|---|---|
| The Hague | 28 August 2024 | Boero, Mauro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5363

This annex lists the patent family members relating to the patent documents cited in  the above-mentioned European search report.
The members are as contained in the European Patent Office EDP file on
The European Patent Office is in no way liable for these particulars which are merely given for the purpose of information.

28-08-2024

| Patent document cited in search report | Publication date | Patent family member(s) | | Publication date |
|---|---|---|---|---|
| US 2022077813 A1 | 10-03-2022 | EP | 3900179 A1 | 27-10-2021 |
| | | ES | 2971954 T3 | 10-06-2024 |
| | | US | 2022077813 A1 | 10-03-2022 |
| | | WO | 2020125898 A1 | 25-06-2020 |

EPO FORM P0459

For more details about this annex : see Official Journal of the European Patent Office, No. 12/82